# EUROPEAN PATENT SPECIFICATION

(11) **EP 3 307 532 B1**
(45) Date of publication and mention of the grant of the patent: **09.10.2019**
(21) Application number: 16808153.7
(22) Date of filing: 08.06.2016
(51) Int. Cl.: B32B 3/30, B32B 7/12, B32B 3/20, B32B 7/04, B32B 5/02, B32B 7/06, B32B 27/08, B32B 27/12, B32B 27/32, B32B 27/36, B32B 27/40, B32B 3/12, B32B 7/05, C09J 7/20, C09J 7/22

(54) **LAMINATED FILM WITH BACKING LAYER, AND FILM ROLL OF SAME**
VERBUNDFOLIE MIT EINER RÜCKSCHICHT UND FOLIENROLLE DAVON
FILM STRATIFIÉ AVEC COUCHE DE REVERS, ET SON ROULEAU DE FILM

(30) Priority: 12.06.2015 JP 2015119683
(43) Date of publication of application: 18.04.2018
(73) Proprietor: 3M Innovative Properties Company, St. Paul, MN 55133-3427 (US)
(72) Inventor: KAKINUMA, Yoshiteru, Shinagawa-ku Tokyo 141-8684 (JP)
(74) Representative: Vossius & Partner Patentanwälte Rechtsanwälte mbB
(86) International application number: PCT/US2016/036346
(87) International publication number: WO 2016/200876

(56) References cited:
- JP-A- H0 633 022
- US-A- 4 397 905
- US-A- 5 130 185
- US-A- 5 891 077
- US-A1- 2005 074 573
- US-A1- 2006 188 704
- US-A1- 2007 218 235
- US-A1- 2009 053 449
- US-A1- 2012 231 199

## Description

### FIELD

The present invention relates to a laminated film with a backing layer. The present invention also relates to a film roll of a laminated film with a backing layer.

### BACKGROUND

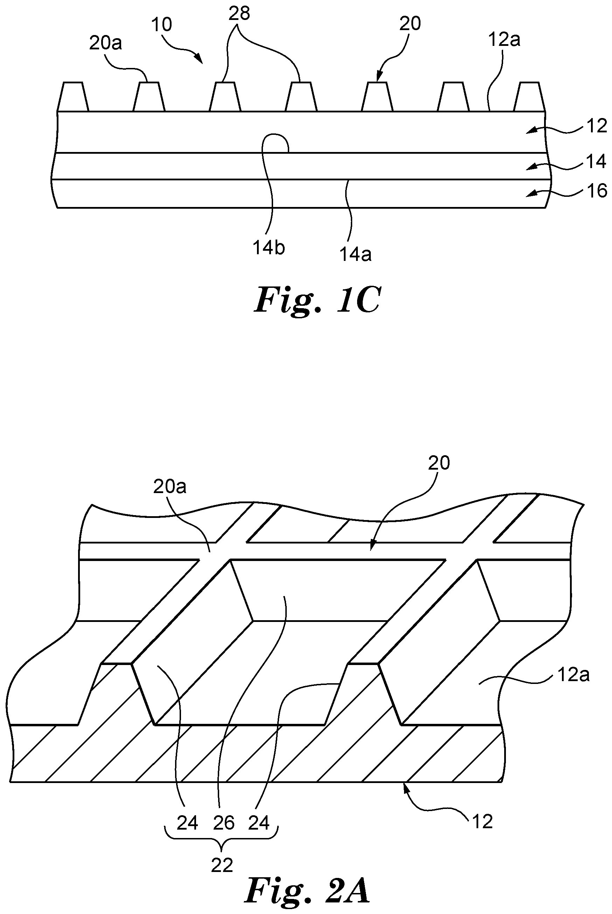

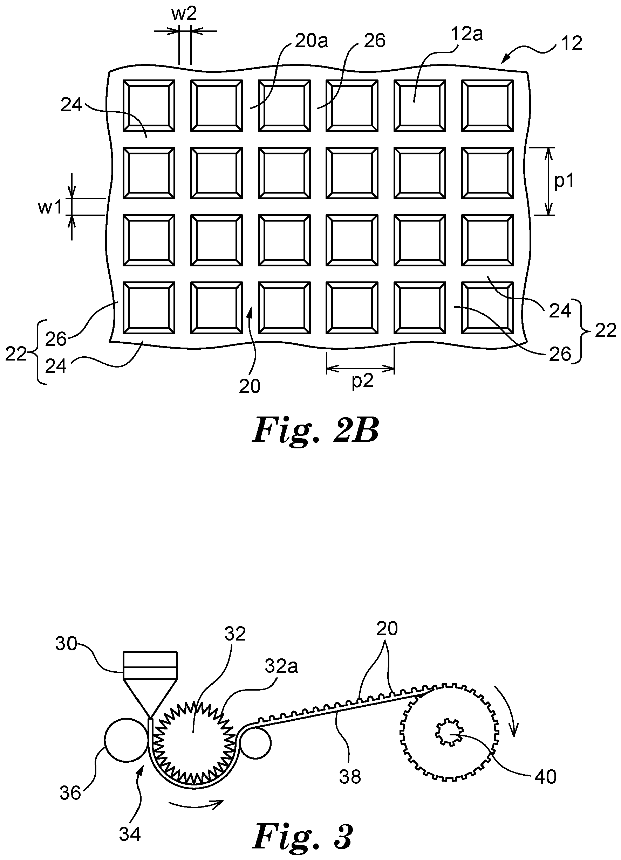

In an adhesive film including a substrate layer and an adhesive layer, a laminated film with a backing layer is known, the backing layer being releasably layered upon the substrate layer on a side opposite the adhesive layer and supporting the substrate layer to be in a spread-out state. For example, Japanese Unexamined Patent Application Publication No. 2003-235890 (claims, paragraphs [0017], [0021]) discloses a medical adhesive tape comprising an adhesive tape body constituted by an adhesive layer formed on one side of a substrate, and reinforcing tape releasably provided on the other side of the substrate in order to reinforce the substrate. Japanese Unexamined Patent Application Publication No. 2003-235890 describes, "The medical adhesive tape 10 comprises a laminate of an adhesive tape body 2 on which an adhesive layer 22 that is bonded to skin or another section to be bonded is formed and reinforcing tape 3 for reinforcing the adhesive tape body 2; in the present embodiment, the medical adhesive tape 10 is formed into a roll wound in multiple layers around a core 5 with the reinforcing tape 3 facing outward", "the reinforcing tape 3 has a three-layered structure comprising a substrate 31 formed from a synthetic resin sheet such as OPP film, a reinforcing adhesive layer 32 formed on one side of the substrate 31 (in FIG. 2, on the upper side), and a release treatment layer 33 formed on the other side of the substrate 31 (in FIG. 2, on the lower side), with the reinforcing adhesive layer 32 side being releasably provided on the adhesive tape body.

US2012231199 discloses a plastic tape, comprising a backing with a first major side comprising a microstructured paint-retention pattern and a second major side that may comprise a microstructured hand-tear pattern and with a pressure-sensitive adhesive layer disposed on second major side of the backing; wherein the backing, the microstructured paint-retention pattern, and the microstructured hand-tear pattern (if present) all constitute a monolithic plastic unit.

JPH0633022 discloses a method for producing a pressure-sensitive adhesive sheet or a tape substrate, characterized in that a release layer comprising an olefin-based resin is formed on one side of an olefin-based resin foamable sheet, and this is heated and foamed. The release layer is made of an olefin-based resin formed on one side of the foamable sheet, which is heated to foam and then a large number of irregularities are formed on the surface of the release layer by an embossing roll.

### SUMMARY

In a laminated film provided with a backing layer that supports a substrate layer of an adhesive film to be in a spread-out state, including features such as the ability to adjust the force needed to remove the backing layer from the adhesive layer (referred to in the present application as "peel strength") to within a desired range, the ability to suppress changes over time in peel strength, the ability to manufacture the film at low cost, etc. These features are desirable for the sake of applications in which the laminated film is wound into rolls or stacked in multiple layers.

One aspect of the present invention is a laminated film provided with a substrate layer including a first surface and a second surface on opposite sides thereof, an adhesive layer layered upon the first surface, and a backing layer that is releasably layered upon the second surface and supports the substrate layer to be in a spread-out state, fine projections being formed on a surface of the backing layer on a side opposite the substrate layer.

Another aspect of the present invention is a film roll formed by winding the laminated film so that the adhesive layer faces inward and tips of the fine projections are in contact with the adhesive layer.

The peel strength of the backing layer of the laminated film according to one aspect of the present invention can be adjusted to within a suitable desired range depending on the application of the laminated film, by selecting the shape, dimensions, etc., of the fine projections on the backing layer (i.e., by selecting the contact area of the tips of the fine projections against the adhesive layer), for uses in which the laminated film is wound into rolls or stacked in multiple layers. The ability to adjust the peel strength by selecting the shape, dimensions, etc., of the fine projections allows for an arrangement in which a release agent is not present between the fine projections and the adhesive layer. An arrangement in which a release agent is not present between the tips of the fine projections and the adhesive layer enables the laminated film to be manufactured at comparatively low cost, allows changes over time in peel strength caused by the migration of the release agent over time to the adhesive layer to be avoided, and allows for the prevention of reductions in the adhesive strength of the adhesive layer caused by migration of the release agent even after the backing layer has been removed.

The film roll according to another aspect of the present invention yields effects comparable to those yielded by the laminated film described above.

### BRIEF DESCRIPTION OF THE DRAWINGS

FIG. 1A is a perspective view of a laminated film according to one embodiment.
FIG. 1B is a front view of the laminated film depicted in FIG. 1A.
FIG. 1C is a front view of a laminated film according to a modified example.
FIG. 2A is a magnified perspective view of a backing layer of the laminated film depicted in FIG. 1A.
FIG. 2B is a plan view of the backing layer depicted in FIG. 2A.
FIG. 3 is an explanatory drawing of one example of a process for manufacturing the backing layer depicted in FIG. 2A.
FIG. 4A is a perspective view of a film roll according to one embodiment.
FIG. 4B is a partially magnified cross-sectional view of the film roll depicted in FIG. 4A.
FIG. 5 is an explanatory drawing of the function of the backing layer depicted in FIG. 2A.
FIG. 6A is a schematic plan view of a modified example of a backing layer.
FIG. 6B is a schematic plan view of a modified example of a backing layer.
FIG. 6C is a schematic plan view of a modified example of a backing layer.
FIG. 6D is a schematic plan view of a modified example of a backing layer.
FIG. 6E is a schematic plan view of a modified example of a backing layer.
FIG. 6F is a schematic plan view of a modified example of a backing layer.
FIG. 6G is a schematic plan view of a modified example of a backing layer.
FIG. 6H is a schematic plan view of a modified example of a backing layer.
FIG. 6I is a schematic plan view of a modified example of a backing layer.
FIG. 7A is a schematic plan view of a modified example of a backing layer.
FIG. 7B is a schematic plan view of a modified example of a backing layer.

### DETAILED DESCRIPTION

Embodiments according to the present invention will be explained in detail below with reference to the appended drawings. Throughout all of the drawings, corresponding constituent elements will be assigned common reference numerals.

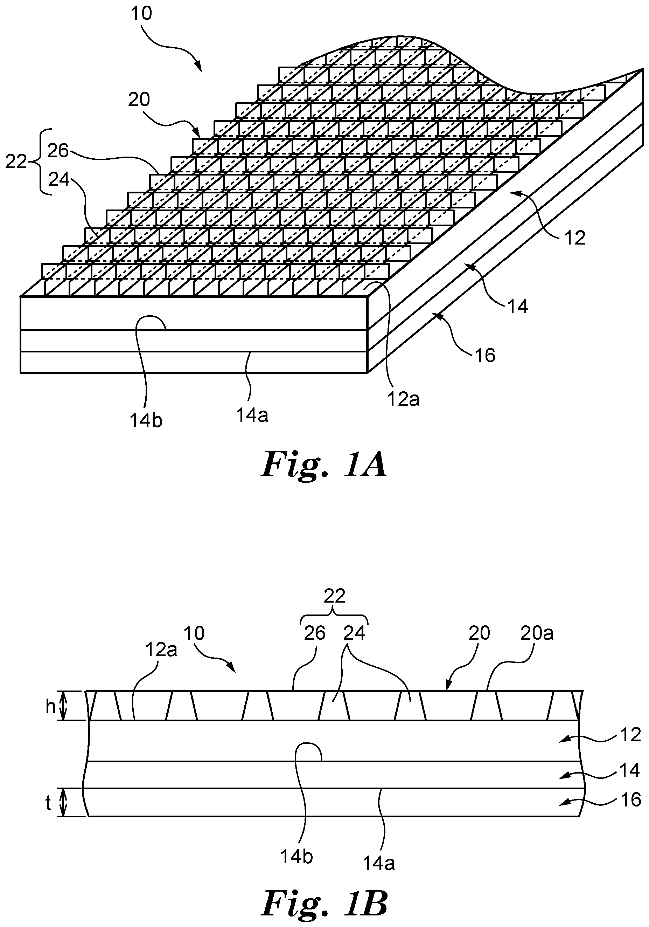

FIGS. 1A and 1B illustrate a laminated film 10 according to one embodiment. FIG. 1C illustrates a modified example of the laminated film 10. FIGS. 2A and 2B illustrate a backing layer 12 of the laminated film 10.

As illustrated in FIGS. 1A and 1B, the laminated film 10 is provided with a substrate layer 14 having a first surface 14a and a second surface 14b on opposite sides thereof, an adhesive layer 16 layered upon the first surface 14a, and a backing layer 12 that is releasably layered upon the second surface 14b and supports the substrate layer 14 to be in a spread-out state. The substrate layer 14 can be formed from a plastic film, a nonwoven fabric, a woven fabric, or the like. The adhesive layer 16 is provided along the first surface 14a of the substrate layer 14 as a layer of adhesive having a substantially uniform thickness t (FIG. 1B). The substrate layer 14 supports the viscoelastic adhesive layer 16 so as to maintain the substantially uniform thickness t. There is no particular limitation upon the composition of the adhesive used for the adhesive layer 16; for example, a known pressure-sensitive adhesive such as a silicone-based adhesive or an acrylic-based adhesive can be used as the adhesive. The adhesive may contain a tackifier as necessary to adjust adhesive strength. The adhesive may further optionally contain various additives such as fillers or UV absorbers.

Fine projections 20 are provided on a surface 12a of the backing layer 12 on a side opposite the substrate layer 14. In the present embodiment, the fine projections 20 are provided with wall-shaped parts 22 of a predetermined shape. As illustrated in FIGS. 2A and 2B, the wall-shaped parts 22 of the fine projections 20 have a plurality of wall sections 24, 26 intersecting one another. In the embodiment illustrated in the drawings, the first plurality of wall sections 24 extend in a linear manner along the surface 12a substantially in parallel to one another and with a substantially uniform spacing therebetween, and the second plurality of wall sections 26 extend in a linear manner along the surface 12a in a direction substantially orthogonal to that of the first plurality of wall sections 24, substantially in parallel to one another and with a substantially uniform spacing therebetween. In the embodiment illustrated in the drawings, the first plurality of wall sections 24 have substantially identical dimensions and shapes, the second plurality of wall sections 26 have substantially identical dimensions and shapes, and the first wall sections 24 and the second wall sections 26 have substantially identical dimensions and shapes in a vertical cross section (FIG. 2A). The spacing between adjacent first wall sections 24 is substantially uniform overall, the spacing between adjacent second wall sections 26 is substantially uniform overall, and the spacing between the first wall sections 24 and the spacing between the second wall sections 26 are substantially equal. Tips 20a of the fine projections 20 having the wall-shaped parts 22 as described above are arranged so as to form the square gridlike pattern in a plan view in FIG. 2B.

As illustrated as the modified example in FIG. 1C, the laminated film 10 may include fine projections 20 comprising a plurality of cylindrical parts 28 instead of fine projections 20 having wall-shaped parts 22. The plurality of cylindrical parts 28 is vertically provided on the surface 12a at a predetermined spacing from one another. In the modified example illustrated in the drawing, the plurality of cylindrical parts 28 have substantially identical dimensions and shapes, and the spacing between adjacent cylindrical parts 28 is substantially uniform overall. The fine projections 20 comprising the cylindrical parts 28 as described above are arranged so that the tips 20a thereof are positioned, for example, at the plurality of intersections of the square gridlike pattern illustrated in FIG. 2B. The fine projections 20 are not limited to the arrangements illustrated in FIGS. 1A to 2B, and the plurality of wall sections 24, 26 or the plurality of cylindrical parts 28 may have different shapes, different dimensions, or different spacing from one another. Various modified examples of the fine projections 20 will be described below.

In the embodiment illustrated in the drawings, the fine projections 20 as a whole, including the wall-shaped parts 22 or cylindrical parts 28 thereof, are formed integrally with the backing layer 12, and the first plurality of wall sections 24 and second plurality of wall sections 26 are integrally joined to each other at the intersecting portions thereof. Such a backing layer 12 can be manufactured via, for example, thermoforming, embossing, calendaring, extrusion, or the like from a desired material. There is no particular limitation upon the material used to form the backing layer 12; examples include olefins such as polyethylene or polypropylene, copolymers thereof, and mixtures thereof.

FIG. 3 schematically illustrates an example of a process for manufacturing the backing layer 12. The example illustrated in the drawing is provided with a nozzle 30 that extrudes the material of the backing layer 12 in a molten state, a casting roller 32 having a female mold 32a of fine projections 20 on the outer circumferential surface thereof, a rubber roller 36 that forms a nip 34 along with the casting roller 32, and an uptake device 40 that continuously takes up a material web 38 after the material web 38 has passed through the nip 34 and solidified. The material of the backing layer 12 in a molten state is continuously extruded from the nozzle 30 and fed into the nip 34, and cooled upon the outer circumferential surface of the continuously rotating casting roller 32 to form a web. While the material web 38 is being cooled, fine projections 20 are continuously formed on one side thereof by the female mold 32a. The material web 38 taken up by the uptake device 40 can be cut to the desired shape and dimensions to obtain the backing layer 12.

The laminated film 10 can be manufactured, for example, by the following process. The material of the substrate layer 14 (e.g., polyurethane) is extruded in a molten state and molded to a prescribed thickness, diluted using a diluent, applied, and dried at a prescribed thickness, or thermocompression-bonded in the form of a sheet molded to a prescribed thickness to the surface of the backing layer 12 manufactured by the process described above opposite the surface 12a on which the fine projections 20 are formed. An adhesive is applied to the first surface 14a of the substrate layer 14 layered upon the backing layer 12 as described above, and dried to form an adhesive layer 16 of a prescribed thickness.

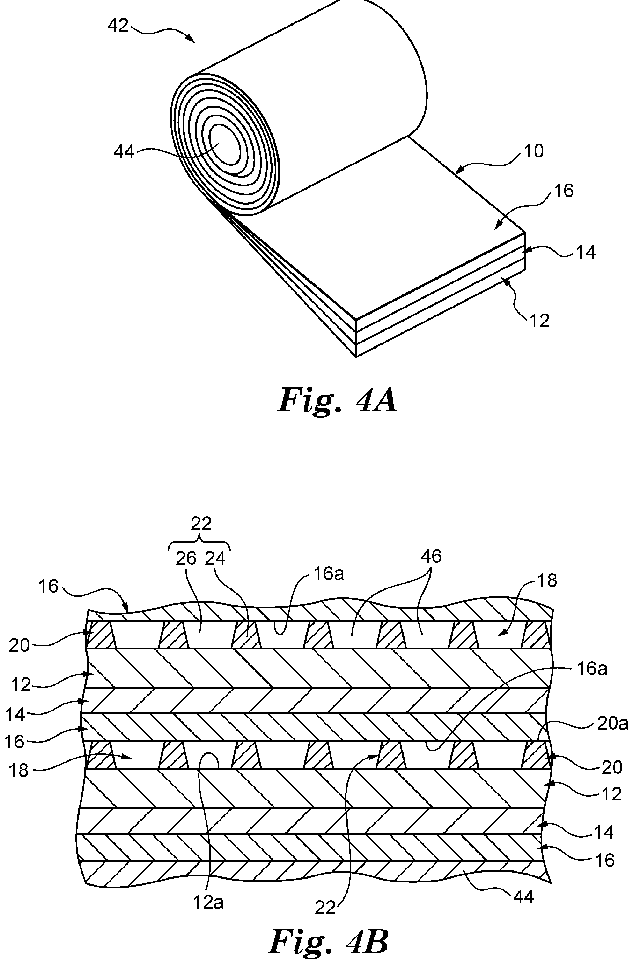

FIGS. 4A and 4B illustrate a film roll 42 including the laminated film 10 described above according to one embodiment. The film roll 42 is formed by winding the laminated film 10 with the adhesive layer 16 facing inward, and bringing the tips 20a of the fine projections 20 of one winding layer of the backing layer 12 on the inner side into contact with one winding layer of the adhesive layer 16 on the outer side. The embodiment illustrated in the drawings is provided with a hollow core 44; the laminated film 10 is continuously wound around the core 44, starting from one end thereof, until a predetermined number of windings is reached. The film roll 42 may also be formed by winding the laminated film 10 alone into a roll, without using the core 44.

As illustrated in FIG. 4B, the film roll 42 is provided with an air layer 18 between one winding layer of the adhesive layer 16 on the outer side and one winding layer of the backing layer 12 on the inner side. The air layer 18 is formed between the adhesive layer 16 and the surface 12a and fine projections 20 of the backing layer 12. In the embodiment illustrated in the drawings, the fine projections 20 have the wall-shaped parts 22 shaped so that the air layer 18 is at least partially enclosed between the adhesive layer 16 and the backing layer 12. By at least partially enclosing the air layer 18, the wall-shaped parts 22 enable a main section 16a of the adhesive layer 16 adjacent to the air layer 18 to be protected from contamination. If the fine projections 20 are constituted only by the cylindrical parts 28 illustrated in FIG. 1C, an air layer 18 that is substantially not enclosed by the fine projections 20 will be formed between the adhesive layer 16 and the backing layer 12.

The backing layer 12 is kept releasably attached to the adhesive layer 16 in the film roll 42 by the adhesive action being exerted upon the tips 20a of the fine projections 20 by the adhesive layer 16. In this state, as illustrated in FIG. 4B, the air layer 18 is divided into a plurality of air layer sections 46 by the first plurality of wall sections 24 and the second plurality of wall sections 26. Each of the individual air layer sections 46 is enclosed on four sides by a pair of first wall sections 24 and a pair of second wall sections 26, protecting the main section 16a of the adhesive layer 16 adjacent to the air layer sections 46 from contamination by powders or liquids.

For example, in the case of a film roll arrangement in which a backing layer not having fine projections 20 contacts the adhesive layer 16, a substantially flat surface extending along the entirety of the backing layer is bonded to the adhesive layer 16, keeping a state in which the backing layer is releasably attached to the adhesive layer 16. Compared to the expected peel strength of the backing layer in the arrangement above, the peel strength of the backing layer 12 of the film roll 42 is reduced to the extent that the contact area of the backing layer 12 to the adhesive layer 16 is reduced to the tips 20a of the fine projections 20, which extend only over parts of the backing layer 12. By selecting a suitable contact area for the tips 20a of the fine projections 20 with respect to the adhesive layer 16, the peel strength can be adjusted to within a desired range. Because peel strength can be adjusted by selecting the shapes, dimensions, etc., of the fine projections 20, the film roll 42 can be configured so that a release agent is not present between the tips 20a of the fine projections 20 and the adhesive layer 16.

In this way, the shape, dimensions, etc., of the fine projections 20 on the backing layer 12 (and thus the contact area of the tips 20a of the fine projections 20 with respect to the adhesive layer 16) in the film roll 42 according to the embodiment described above can be selected so as to adjust the peel strength of the backing layer 12 to within a suitable desired range according to the use to which the film roll 42 is to be applied. Because the peel strength of the backing layer 12 can be adjusted, a greater range of materials can be selected for the backing layer 12 layered upon the adhesive layer 16, even if, for example, the adhesive layer 16 contains a silicone adhesive. For example, a general-purpose material such as an olefin can be used for the backing layer 12, rather than the comparatively expensive materials generally used for silicone adhesives, such as fluorine-based release agents. This allows the film roll 42 to be manufactured at comparatively low cost even if the adhesive layer 16 contains a silicone adhesive.

The presence of the wall-shaped parts 22 of the fine projections 20 allows the main section 16a of the adhesive layer 16 adjacent to the air layer 18 to be protected from contamination, thereby allowing the film roll 42 to be implemented, for example, as a roll for a medical product such as surgical tape. In addition, adopting an arrangement for the film roll 42 in which a release agent is not present between the tips 20a of the fine projections 20 and the adhesive layer 16 allows for the prevention of reduction in the adhesive strength (bonding strength) of the adhesive layer 16 caused by the transfer of release agent (such as the migration of fluorine-based release agents or silicone-based release agents to the adhesive surface) after the roll is unwound and the backing layer 12 is removed from the adhesive layer 16. The lack of release agent also makes it possible to avoid changes over time in peel strength caused by migration over time of release agent to the adhesive layer, thereby allowing for changes over time in peel strength in the film roll 42 to be suppressed.

The peel strength (initial peel strength) of the backing layer 12 in the film roll 42 can be adjusted by selecting suitable values for various parameters of the fine projections 20, such as follows.

### i) Projection height h of the fine projections 20 from the surface 12a (FIG. 1B):

For example, h can be 50 µm or greater, 0.05 × t or greater, 120 µm or less, or 2,000 µm or less. Preferably, h can be 0.75 × t or greater, or equal to or greater than t.

### ii) Pitches p1, p2 of adjacent wall sections 24, 26 (FIG. 2B):

For example, p1 can be 200 µm or greater or 400 µm or greater and p2 can be 200 µm or greater or 400 µm or greater, p1 can be 4,000 µm or less or 1,000 µm or less and p2 can be 4,000 µm or less or 1,000 µm or less, or p1 can be equal to p2.

### iii) Widths w1, w2 of tips 20a of fine projections 20 (wall sections 24, 26) (FIG. 2B):

For example; w1 can be greater than 0 µm and w2 can be greater than 0 µm, w1 can be 100 µm or less and w2 100 µm or less, or w1 can be equal to w2.

### iv) Area ratio R of contact surface between fine projections 20 and adhesive layer 16 to total surface of adhesive layer 16:

For example, R can be greater than 0% or 50% or less (assuming both fine projections 20 and adhesive layer 16 are rigid).

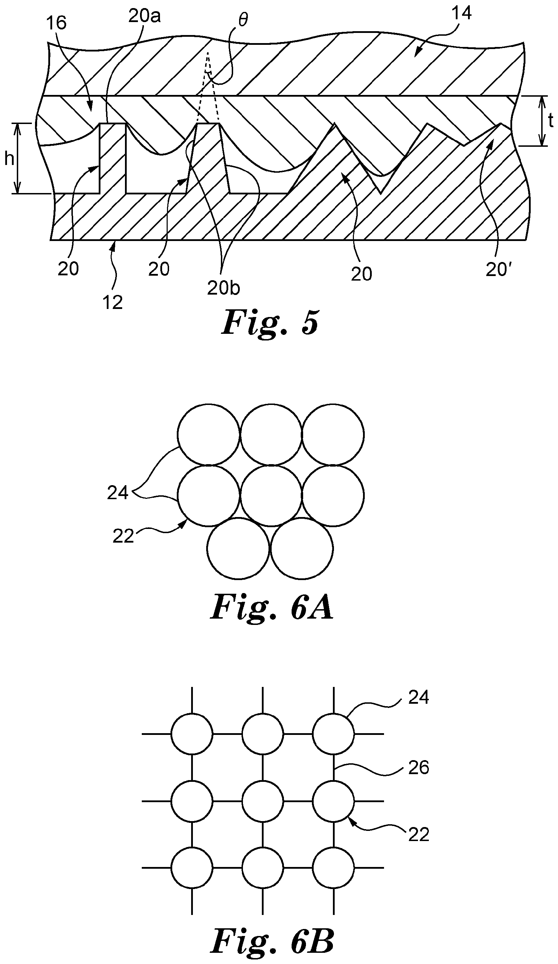

### v) Angle θ of intersection between side surfaces 20b of fine projections 20 (FIG. 5):

For example, θ can be 0° or greater, 90° or less, or 60° or less.

The peel strength F of a backing layer 12 yielded by selecting appropriate values for some of parameters i-v described above can be, for example, 0.10 N/25 mm or greater, 0.15 N/25 mm or greater, 0.20 N/25 mm or greater, 2.0 N/25 mm or less, 1.5 N/25 mm or less, or 1.0 N/25 mm or less.

FIG. 5 is an explanatory drawing of the function of the fine projections 20 on the backing layer 12, and is a schematic cross-sectional view of the manners in which the parameters i-v affect the peel strength F. The fine projection 20 positioned furthest to the left in the drawing has an angle θ of 0°, and substantially only the tip 20a thereof contacts the viscoelastic adhesive layer 16. The second fine projection 20 from the left in the drawing has an angle θ of 0° ≤ θ ≤ 60°, and substantially only the tip 20a thereof contacts the viscoelastic adhesive layer 16; however, part of the side surfaces 20b adjacent to the tip 20a may also contact the adhesive layer 16 depending on the level of viscoelasticity thereof. As θ approaches 90°, the area of contact between the side surfaces 20b and the adhesive layer 16 increases, as indicated by the third fine projection 20 from the left in the drawing. The fine projection 20' positioned furthest to the right in the drawing has an angle θ that is greater than 90°, and substantially the entirety of the side surfaces thereof contacts the adhesive layer 16. As the area ratio R of the contact surface between the fine projections 20 and the adhesive layer 16 increases, peel strength F increases. It should be noted that if the fine projections 20 have identical dimensions or shapes, the area ratio R will vary according to the viscoelasticity or pliability of the adhesive layer 16, thereby leading to variations in peel strength F.

The effects yielded by the fine projections 20 described above are essentially obtainable from the laminated film 10 constituting the film roll 42. Accordingly, in applications in which, for example, multiple sheets of laminated film 10 cut into sheets of a prescribed shape are stacked in layers for storage, the fine projections 20 of the backing layer 12 on the lower laminated film 10 exerts similar effects upon the peel strength F of the adhesive layer 16 on the upper laminated film 10 as the fine projections 20 in the film roll 42. Thus, the laminated film 10 when stacked in sheets as described above yields effects comparable to those yielded by the laminated film 10 constituting the film roll 42.

The fine projections 20 can have various configurations other than those described above. FIGS. 6A to 6I substantially correspond to FIG. 2B, and schematically illustrates patterns formed by the tips 20a of variously configured fine projections 20. The configurations of the fine projections 20 illustrated in the drawings are as follows.

In FIG. 6A, an arrangement is provided with wall-shaped parts 22 formed by combining multiple circular wall sections 24.

In FIG. 6B, an arrangement is provided with wall-shaped parts 22 formed by multiple circular wall sections 24 connected by multiple linear wall sections 26.

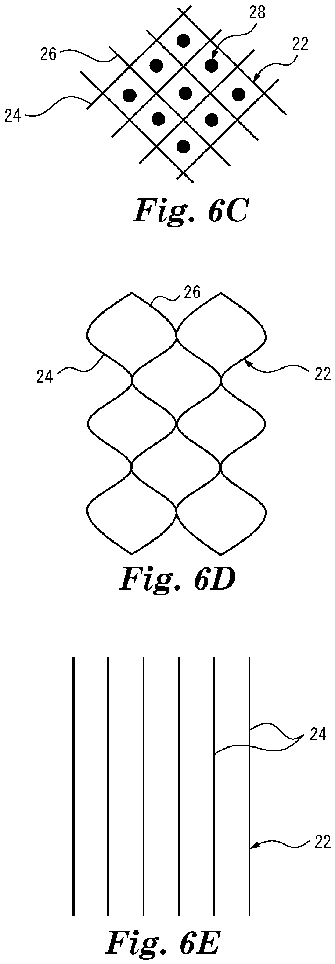

In FIG. 6C, an arrangement is provided with wall-shaped parts 22 having a plurality of linear, wall sections 24, 26 intersecting one another, and cylindrical parts 28 disposed at a distance from the wall-shaped parts 22 within rectangular or rhomboid spaces surrounded by the wall sections 24, 26.

In FIG. 6D, an arrangement is provided with wall-shaped parts 22 formed by combining multiple wave-shaped wall sections 24, 26.

In FIG. 6E, an arrangement is provided with wall-shaped parts 22 formed by arranging a plurality of linear wall sections 24 in parallel to each other and isolated from each other at a prescribed distance. In this case, the wall-shaped parts 22 partially enclose the air layer 18 (FIG. 4B) between the adhesive layer 16 and the backing layer 12. Depending on how the laminated film 10 is applied, such wall-shaped parts 22 are still capable of protecting the main section 16a of the adhesive layer 16 adjacent to the air layer 18 (FIG. 4B) from contamination.

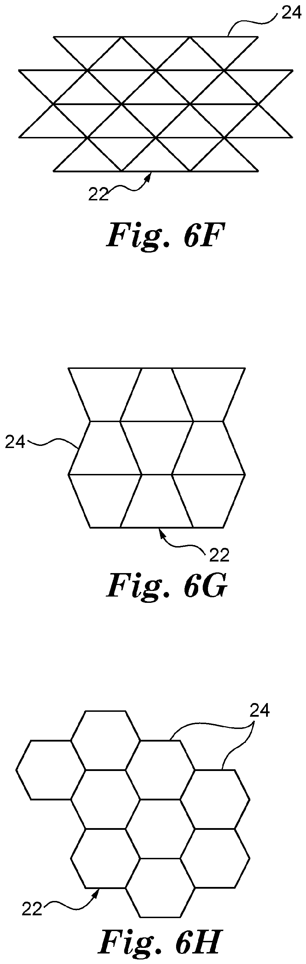

In FIG. 6F, an arrangement is provided with wall-shaped parts 22 formed by combining multiple triangular wall sections 24.

In FIG 6G, an arrangement is provided with wall-shaped parts 22 formed by combining multiple trapezoidal wall sections 24.

In FIG 6H, an arrangement is provided with wall-shaped parts 22 formed by combining multiple hexagonal wall sections 24.

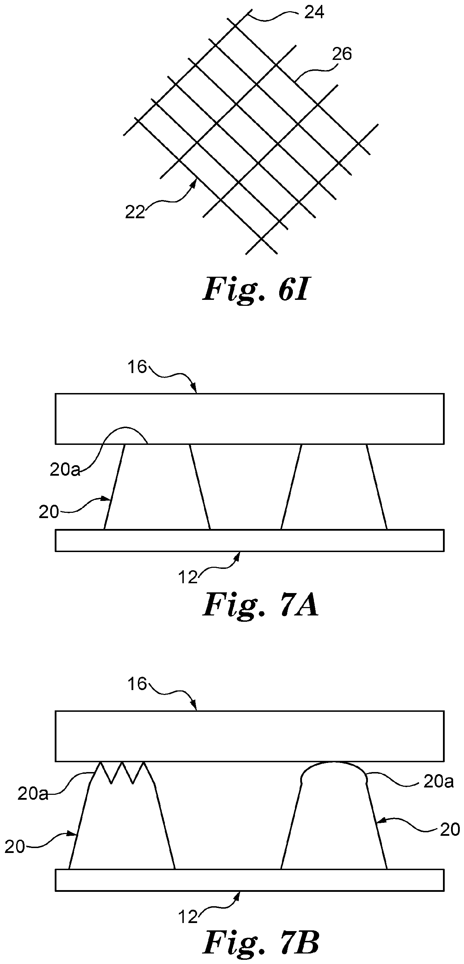

In FIG. 6I, an arrangement is provided with a plurality of intersecting linear wall sections 24, 26 disposed at different spacings. Fine projections 20 having wall-shaped parts 22 of this sort are shaped so that the peel strength of the backing layer 12 differs according to the peel direction of the backing layer 12 along the adhesive layer 16. In the example illustrated in the drawings, the peel strength of the backing layer 12 when removing the same in a direction following which the wall sections 24, which are spaced further apart (i.e., in a direction substantially parallel to the wall sections 26) is less than the peel strength of the backing layer 12 when removing the same in a direction following the wall sections 26, which are spaced closer together (i.e., in a direction substantially parallel to the wall sections 24).

FIGS. 7A and 7B schematically illustrate various surface shapes of the tips 20a of the fine projections 20. The fine projections 20 illustrated in FIG. 7A have tips 20a with flat surface shapes. The fine projections 20 illustrated in FIG. 7B have tips 20a with non-flat surface shapes. For example, the fine projections 20 to the left in FIG. 7B have tips 20a with rough surfaces having multiple recesses and protrusions, and the fine projections 20 to the right in FIG. 7B have tips 20a with circular or bow-shaped curved surfaces. Arrangement in which the tips 20a of the fine projections 20 have non-flat surface shapes allow the area ratio R (and thus peel strength) to be reduced the harder the adhesive layer 16 is.

### EXAMPLES

The various effects exhibited by the laminated film 10 (or film roll 42) in connection with peel strength F were evaluated according to the following tests 1 to 5.

### Test 1

The backing layers 12 illustrated in FIGS. 2A and 2B were manufactured with different values for parameters i, ii, and iv for the fine projections 20 to prepare samples 1 to 5. The individual samples 1 to 5 were manufactured by preparing 200 µm-thick olefin sheets using a 90:10 blend of homopolypropylene and low density polyethylene, followed by pressing the olefin sheets under heat to a metal template having a female mold for the fine projections 20. Meanwhile, flat, 200 µm-thick olefin sheets prepared using a 90:10 blend of homopolypropylene and low density polyethylene were used as a backing layer 12' of a Comparative Example 1.

The parameters i, ii, and iv for the respective samples were as follows.
Sample 1: h = 100 µm; p1 = p2 = 500 µm; R = 6.9%
Sample 2: h = 100 µm; p1 = p2 = 800 µm; R = 4.3%
Sample 3: h = 100 µm; p1 = p2 = 1000 µm; R = 3.5%
Sample 4: h = 75 µm; p1 = p2 = 800 µm; R = 4.3%
Sample 5: h = 125 µm; p1 = p2 = 800 µm; R = 3.5%

The other parameters iii and v were the same for all samples (w1 = w2 = 35 µm; θ = 40°).

As a silicone adhesive tape ("tape 1") having an adhesive layer 16 and a substrate layer 14, a laminate was prepared by layering an adhesive disclosed in Japanese Unexamined Patent Application Publication No. 2012-507608 (Working Example 24) on a 25 µm (1 mil) -thick polyester elastomer film side of the substrate layer 14 formed by thermally layering the polyester elastomer film upon a nonwoven fabric so as to form a 100 µm-thick adhesive layer 16 after curing. The tape 1 had a width of 25 mm, and the adhesive layer 16 had a thickness of 100 µm.

The backing layers 12 of samples 1 to 5 and the backing layer 12' of Comparative Example 1 were each layered onto the adhesive layer 16 of the tape 1 described above, and a 2-kg roller was passed once back and forth over the substrate layer 14 of the tape 1 to produce model laminates of film rolls 42 according to various working examples (including the backing layer 12, adhesive layer 16, and substrate layer 14 in FIG. 4B in that order; hereinafter, referred to as "model laminate 42") and a model laminate of a film roll 42' according to a Comparative Example (likewise; hereinafter, referred to as "model laminate 42'). The model laminates 42, 42' were exposed to first conditions of being left at room temperature (23°C) for 20 minutes and second conditions of being left at 60°C for seven days, after which a peel test was performed by peeling the tapes 1 of the individual model laminates 42, 42' from the backing layers 12, 12' in the 180° direction at a speed of 300 mm/minute to measure peel strength F (N/25 mm). Measurement results (three-test average values) are shown in Table 1.

**[Table 1]**

| Release layer | Peel strength (N/25 mm) | |
|---|---|---|
| | Tape 1 | |
| | First conditions | Second conditions |
| Sample 1 | 0.99 | 0.91 |
| Sample 2 | 0.70 | 0.78 |
| Sample 3 | 0.71 | 0.46 |
| Sample 4 | 0.94 | 0.80 |
| Sample 5 | 0.60 | 0.60 |
| Comparative Example 1 | 1.86 | 2.63 |

As shown in Table 1, the peel strength F of the model laminate 42' having the backing layer 12' of Comparative Example 1 increased over time at elevated temperatures (second conditions) compared to initial conditions (first conditions), whereas the peel strength F of the model laminates 42 having the backing layers 12 of samples 1 to 5 exhibited almost no change even over time at elevated temperatures.

### Test 2

The following tape 2 and tape 3 were prepared as silicone adhesive tapes including an adhesive layer 16 and a substrate layer 14.

Tape 2: 60 parts of MQ resin (MQ 803 TF (trade name); available from Wacker Chemie AG (Munich)) were dissolved as an adhesive in 100 parts of a silanol-terminated polydimethyl siloxane solution (Wacker® Elastomer 350N (trade name); available from Wacker Chemie AG (Munich)) to obtain a coating syrup. The coating syrup was applied to a substrate layer 14 constituted by the same nonwoven fabric as the substrate layer 14 of the tape 1 of test 1 to a thickness of 0.050 mm using a knife coater, then immediately cured via exposure to 60 KGy/180 KeV electron beam irradiation to form an adhesive layer 16.

Tape 3: Prepared under the same conditions as tape 2, except that the coating syrup was applied to a thickness of 0.025 mm.

The backing layers 12 of samples 1 to 5 and the backing layer 12' of Comparative Example 1 were layered upon the adhesive layers 16 of the tapes 2 and 3 described above, and a 2-kg roller was passed back and forth one time over the substrate layers 14 of the tapes 2, 3 to obtain model laminates 42 according to Working Examples and a model laminate 42' according to a Comparative Example. Peel strength F (N/25 mm) was measured by subjecting the model laminates 42, 42' to peel tests under the same conditions (first conditions, second conditions) as in test 1. Measurement results (three-test average values) are shown in Table 2.

**[Table 2]**

| Release layer | Peel strength (N/25 mm) | | | |
|---|---|---|---|---|
| | Tape 2 | | Tape 3 | |
| | First conditions | Second conditions | First conditions | Second conditions |
| Sample 1 | 0.58 | 0.54 | 0.42 | 0.35 |
| Sample 2 | 0.24 | 0.36 | 0.23 | 0.23 |
| Sample 3 | 0.23 | 0.33 | 0.17 | 0.20 |
| Sample 4 | 0.29 | 0.37 | 0.18 | 0.30 |
| Sample 5 | 0.27 | 0.31 | 0.15 | 0.27 |
| Comparative Example 1 | 1.53 | 2.78 | 0.98 | 2.36 |

In the cases of using any one of the tape 2 and the tape 3, as shown in Table 2, the peel strength F of the model laminate 42' having the backing layer 12' of Comparative Example 1 increased over time at elevated temperatures (second conditions) compared to initial conditions (first conditions), whereas the peel strength F of the model laminates 42 having the backing layers 12 of samples 1 to 5 exhibited almost no change even over time at elevated temperatures.

### Test 3

A sample 6 was prepared by manufacturing a backing layer 12 as illustrated in FIGS. 2A and 2B by the method described using FIG. 3 with the same parameters i to v as in sample 2. The coating weight was 800 g/m². Meanwhile, a backing layer 12' (Fujiko® K1 (trade name); available from Fujico Co., Ltd. (Marugame)) to the surface of which was applied a fluorosilicone release agent was prepared as Comparative Example 2, and a backing layer 12' (Scotchpak (brand name) 9741 (trade name); available from 3M Japan Ltd. (Tokyo)) to the surface of which was applied a fluorocarbon release agent was prepared as Comparative Example 3.

The tape 1 used in test 1 was prepared as a silicone adhesive tape having an adhesive layer 16 and a substrate layer 14. The backing layer 12 of sample 6 and the backing layers 12' of Comparative Examples 2 and 3 were layered on the adhesive layer 16 of the tape 1, and a 2-kg roller was passed back and forth one time over the substrate layers 14 of the tape 1 to obtain a model laminate 42 according to a Working Example and a model laminate 42' according to a Comparative Example. Peel strength F (N/25 mm) was measured by subjected the model laminates 42, 42' to peel tests under the same conditions (first conditions, second conditions) as in test 1. Measurement results (three-test average values) are shown in Table 3.

**[Table 3]**

| Release layer | Peel strength (N/25 mm) | |
|---|---|---|
| | Tape 1 | |
| | First conditions | Second conditions |
| Sample 6 | 0.70 | 0.68 |
| Comparative Example 2 | 0.38 | 0.65 |
| Comparative Example 3 | 0.40 | 0.85 |

As shown in Table 3, the peel strength F of both of the model laminates 42' having the backing layers 12' of Comparative Examples 2 and 3 increased over time at elevated temperatures (second conditions) compared to initial conditions (first conditions), whereas the peel strength F of the model laminate 42 having the backing layer 12 of sample 6 exhibited almost no change even over time at elevated temperatures. In Comparative Examples 2 and 3, it is considered that the release agent migrated to the adhesive layer 16 when subjected to elevated temperatures over time at elevated temperatures.

### Test 4

The following tape 4 was prepared as a silicone adhesive tape having an adhesive layer 16 and a substrate layer 14.

Tape 4: 30 parts of MQ resin (MQ 803 TF (trade name); available from Wacker Chemie AG (Munich)) were dissolved as an adhesive in 100 parts of a trimethylsilyl-terminated polydimethyl siloxane solution (Wacker® Silicone Fluid AK 1,000,000 (trade name); available from Wacker Chemie AG (Munich)) to obtain a coating syrup. The coating syrup was applied to a substrate layer 14 constituted by a silicone-treated PET film to a thickness of 0.050 mm using a knife coater, then immediately cured via exposure to 40 KGy/180 KeV electron beam irradiation to form an adhesive layer 16.

The backing layer 12 of sample 6 and the backing layers 12' of Comparative Examples 2 and 3 were layered on the adhesive layer 16 of the tape 4 described above, and a 2-kg roller was passed back and forth one time over the substrate layers 14 of the tape 4 to obtain a model laminate 42 according to a Working Example and model laminates 42' according to Comparative Examples. The model laminates 42, 42' were exposed to third conditions of being left at room temperature (23°C) for seven days and second conditions of being left at 60°C for seven days, after which a peel test was performed by peeling the tapes 4 of the individual model laminates 42, 42' from the backing layers 12, 12' in the 180° direction at a speed of 300 mm/minute to measure peel strength F (N/25 mm). Measurement results (three-test average values) are shown in Table 4.

**[Table 4]**

| Release layer | Peel strength (N/25 mm) | |
|---|---|---|
| | Tape 4 | |
| | Third conditions | Second conditions |
| Sample 6 | 0.14 | 0.08 |
| Comparative Example 2 | 0.43 | 0.54 |
| Comparative Example 3 | 0.39 | 0.54 |

As shown in Table 4, the peel strength F of both of the model laminates 42' having the backing layers 12' of Comparative Examples 2 and 3 increased at elevated temperature environments (second conditions) compared to room temperature environments (third conditions), whereas the peel strength F of the model laminate 42 having the backing layer 12 of sample 6 exhibited almost no change even at elevated temperatures. In Comparative Examples 2 and 3, it is considered that the release agent migrated to the adhesive layer 16 when subjected to elevated temperatures.

### Test 5

After the model laminates 42, 42' had been exposed to the third conditions and the second conditions in test 4, the backing layers 12, 12' were removed therefrom, the adhesive layers 16 of the respective tapes 4 were placed over a stainless steel plate, and a 2-kg roller was passed back and forth one time over the substrate layers 14 to bond the tapes 4 to the stainless steel plate. A peel test was performed by peeling the tapes 4 from the stainless steel plate in the 180° direction at a speed of 300 mm/minute to measure the force needed to peel the tapes 4 from the stainless steel plate (i.e., the adhesive strength; N/25 mm). Measurement results (three-test average values) are shown in Table 5.

**[Table 5]**

| Release layer | Adhesive strength (N/25 mm) | |
|---|---|---|
| | Tape 4 | |
| | Third conditions | Second conditions |
| Sample 6 | 2.77 | 2.65 |
| Comparative Example 2 | 2.39 | 2.04 |
| Comparative Example 3 | 2.34 | 2.25 |

As shown in Table 5, the adhesive strength of both of the tapes 4 of Comparative Examples 2 and 3 after the backing layers 12' had been removed therefrom decreased at elevated temperature environments (second conditions) compared to room temperature environments (third conditions), whereas the adhesive strength of the tape 4 of sample 6 after the backing layer 12 had been removed therefrom exhibited almost no change even at elevated temperature environments. In Comparative Examples 2 and 3, it is considered that a portion of the release agent in the backing layer 12' migrated to the adhesive layer 16 at elevated temperature environments.

### REFERENCE NUMERALS

10 Laminated film
12 Backing layer
14 Adhesive layer
16 Substrate layer
18 Air layer
20 Fine projections
20a Tip
22 Wall-shaped part
24, 26 Wall section
28 Cylindrical part
42 Film roll
46 Air layer section

## Claims

1. A film roll comprising:
a laminated film comprising,
a substrate layer having a first surface and a second surface on opposite sides thereof;
an adhesive layer layered upon the first surface;
a backing layer that is releasably layered upon the second surface, the backing layer supporting the substrate layer to be in a spread-out state; and
fine projections being formed on a surface of the backing layer on a side opposite the substrate layer.
wherein the laminated film is wound with the adhesive layer faces inward and tips of the fine projections in contact with the adhesive layer, and
wherein an air layer at least partially enclosed by the fine projections is formed between the adhesive layer and the backing layer.

2. The film roll according to claim 1, wherein the fine projections have a wall-shaped part that protects a main section of the adhesive layer adjacent to the air layer from contamination.

3. The film roll according to claim 2, wherein the wall-shaped parts have a plurality of wall sections intersecting one another.

4. The film roll according to claim 2, wherein the wall-shaped parts have a plurality of wall sections isolated from one another.

5. The film roll according to claim 3, wherein the air layer comprises a plurality of air layer sections divided by the plurality of wall sections.

6. The film roll according to claim 1, wherein the fine projections comprise cylindrical parts, tips of which are in contact with the adhesive layer.

7. The film roll according to claim 1, wherein a height of the fine projection projecting from the surface is equal to or greater than the thickness of the adhesive layer.

8. The film roll according to claim 1, wherein a release agent is not present between the fine projections and the adhesive layer.

## Patentansprüche

1. Eine Folienrolle, aufweisend:
eine laminierte Folie, die Folgendes aufweist:
eine Substratschicht, die eine erste Oberfläche und eine zweite Oberfläche auf einander gegenüberliegenden Seiten aufweist;
eine Klebeschicht, die auf der ersten Oberfläche aufgebracht ist;
eine Stützschicht, die lösbar auf der zweiten Oberfläche aufgebracht ist, wobei die Stützschicht die Substratschicht trägt, damit sie sich in einem ausgebreiteten Zustand befindet; und feine Vorsprünge, die auf einer Oberfläche der Stützschicht auf einer der Substratschicht gegenüberliegenden Seite gebildet sind;
wobei die laminierte Folie mit den Klebeschichtflächen nach innen und den Spitzen der feinen Vorsprünge in Kontakt mit der Klebeschicht gewickelt ist, und
wobei eine Luftschicht, die zumindest teilweise von den feinen Vorsprüngen eingeschlossen ist, zwischen der Klebeschicht und der Stützschicht gebildet ist.

2. Die Folienrolle nach Anspruch 1, wobei die feinen Vorsprünge einen wandförmigen Teil aufweisen, der einen an die Luftschicht angrenzenden Hauptabschnitt der Klebeschicht vor Verunreinigung schützt.

3. Die Folienrolle nach Anspruch 2, wobei die wandförmigen Teile eine Vielzahl von Wandabschnitten aufweisen, die sich gegenseitig schneiden.

4. Die Folienrolle nach Anspruch 2, wobei die wandförmigen Teile eine Vielzahl von voneinander isolierten Wandabschnitten aufweisen.

5. Die Folienrolle nach Anspruch 3, wobei die Luftschicht eine Vielzahl von Luftschichtabschnitten aufweist, die durch die Vielzahl von Wandabschnitten unterteilt sind.

6. Die Folienrolle nach Anspruch 1, wobei die feinen Vorsprünge zylindrische Teile aufweisen, deren Spitzen mit der Klebeschicht in Kontakt stehen.

7. Die Folienrolle nach Anspruch 1, wobei eine Höhe des von der Oberfläche vorstehenden feinen Vorsprungs gleich oder größer als die Dicke der Klebeschicht ist.

8. Die Folienrolle nach Anspruch 1, wobei zwischen den feinen Vorsprüngen und der Klebeschicht kein Trennmittel vorhanden ist.

## Revendications

1. Rouleau de film comprenant :
un film stratifié comprenant,
une couche de substrat ayant une première surface et une deuxième surface sur des côtés opposés de celle-ci ;
une couche adhésive mise en couche sur la première surface ;
une couche de soutien qui est mise en couche de manière amovible sur la deuxième surface, la couche de soutien supportant la couche de substrat de façon à être dans un état étalé ; et
de fines saillies étant formées sur une surface de la couche de soutien sur un côté opposé à la couche de substrat;
dans lequel le film stratifié est enroulé avec la couche adhésive fait face vers l'intérieur et les pointes des fines saillies en contact avec la couche adhésive, et
dans lequel une couche d'air au moins partiellement enfermée par les fines saillies est formée entre la couche adhésive et la couche de soutien.

2. Rouleau de film selon la revendication 1, dans lequel les fines saillies ont une partie en forme de paroi qui protège une section principale de la couche adhésive adjacente à la couche d'air d'une contamination.

3. Rouleau de film selon la revendication 2, dans lequel les parties en forme de paroi ont une pluralité de sections de paroi se croisant l'une l'autre.

4. Rouleau de film selon la revendication 2, dans lequel les parties en forme de paroi ont une pluralité de sections de paroi isolées les unes des autres.

5. Rouleau de film selon la revendication 3, dans lequel la couche d'air comprend une pluralité de sections de couche d'air divisées par la pluralité de sections de paroi.

6. Rouleau de film selon la revendication 1, dans lequel les fines saillies comprennent des parties cylindriques, dont les pointes sont en contact avec la couche adhésive.

7. Rouleau de film selon la revendication 1, dans lequel une hauteur de la fine saillie faisant saillie à partir de la surface est égale ou supérieure à l'épaisseur de la couche adhésive.

8. Rouleau de film selon la revendication 1, dans lequel un agent de libération n'est pas présent entre les fines saillies et la couche adhésive.
